# EUROPÄISCHE PATENTSCHRIFT

(11) **EP 2 144 087 B1**
(45) Veröffentlichungstag und Bekanntmachung des Hinweises auf die Patenterteilung: **26.05.2010**
(21) Anmeldenummer: 08012610.5
(22) Anmeldetag: 11.07.2008
(51) Int. Cl.: G01S 15/04, G01S 15/08, G01S 7/52

(54) **Verfahren und Ultraschallsensor zur Höhenbestimmung von Objekten auf einer Transporteinrichtung**
Method and ultrasound sensor for calculating the height of objects on a transport device
Procédé et capteur à ultrasons destinés à la détermination de la hauteur d'objets sur un dispositif de transport

(43) Veröffentlichungstag der Anmeldung: 13.01.2010
(73) Patentinhaber: Pepperl + Fuchs GmbH, 68307 Mannheim (DE)
(72) Erfinder: Knittel, Thomas, 67165 Waldsee (DE); Scherer, Jens, 68305 Mannheim (DE)
(74) Vertreter: Schiffer, Axel Martin

(56) Entgegenhaltungen:
- EP-A- 0 571 913
- US-A- 4 875 198
- US-A- 5 220 536
- US-A- 5 672 815
- US-A- 5 761 155

## Beschreibung

Die vorliegende Erfindung betrifft in einem ersten Gesichtspunkt ein Verfahren zur Höhenbestimmung von Objekten auf einer Transporteinrichtung nach Anspruch 1.

In einem zweiten Aspekt betrifft die Erfindung einen Ultraschallsensor zur Höhenbestimmung von Objekten auf einer Transporteinrichtung nach Anspruch 10.

Bei einem gattungsgemäßen Verfahren zur Höhenbestimmung von Objekten auf einer Transporteinrichtung sendet ein relativ zu, insbesondere über, der Transporteinrichtung positionierter Ultraschallsensor wiederholend Ultraschallpulse in Richtung der Transporteinrichtung und gegebenenfalls darauf befindlicher nachzuweisender Objekte aus, die Ultraschallpulse werden dann von einer Oberfläche der Transporteinrichtung oder von Objektoberflächen der nachzuweisenden Objekte reflektiert und von dem Ultraschallsensor nachgewiesen. Aus den Sendezeitpunkten und den Nachweiszeitpunkten der Ultraschallpulse werden Laufzeiten der Ultraschallpulse bestimmt und aus Laufzeiten der an einer Objektoberfläche reflektierten Ultraschallpulse wird eine Höhe der Objektoberfläche relativ zur Oberfläche der Transporteinrichtung bestimmt.

Ein gattungsgemäßer Ultraschallsensor zur Höhenbestimmung von Objekten auf einer Transporteinrichtung weist einen Sender zum wiederholenden Aussenden von Ultraschallpulsen und einen Empfänger zum Empfangen von Ultraschallpulsen, die von einer Oberfläche der Transporteinrichtung oder von Objektoberflächen der nachzuweisenden Objekte reflektiert werden, auf. Außerdem ist eine Steuer- und Auswerteeinheit vorhanden, welche eingerichtet ist zum Ansteuern des Ultraschallsenders, zum Bestimmen von Laufzeiten der Ultraschallpulse aus Sendezeitpunkten und Nachweiszeitpunkten der Ultraschallpulse und zum Bestimmen einer Höhe einer Objektoberfläche relativ zur Oberfläche der Transporteinrichtung aus Laufzeiten der an der Oberfläche reflektierten Ultraschallpulse.

Der Einsatz von Ultraschallsensoren zum Nachweis von Objekten ist in der industriellen Automatisierungstechnik seit langem bekannt. Hierbei können Auflösungen im Submillimeterbereich erreicht werden. Prinzipiell können deshalb auch sehr dünne Objekte, wie beispielsweise Bleche, die einer Presse zugeführt werden, überwacht und nachgewiesen werden.

Eine Bestimmung der Höhe eines, insbesondere platten- oder blattartigen, Objekts relativ zu einer Oberfläche der Transporteinrichtung ist gleichbedeutend mit einer Bestimmung der Dicke des Objekts.

Da eine Höhenbestimmung durch Auswertung von Ultraschalllaufzeiten relativ zu einer Referenzgröße, beispielsweise also relativ zu einer Oberfläche der Transporteinrichtung erfolgen muss, hängt eine mögliche Auslösung und damit eine Genauigkeit der Höhen- oder Dickenbestimmung insbesondere auch davon ab, wie genau die Referenz bekannt ist.

In diesem Zusammenhang können beispielsweise thermische Driften des Ultraschallsensors selbst oder mechanische Driften des gesamten mechanischen Aufbaus eine nachteilige Rolle spielen.

Diese Gesichtspunkte sind insbesondere bedeutsam, wenn sehr dünne Objekte, beispielsweise Bleche oder Papierbögen nachgewiesen werden sollen.

Eine Ultraschall-Messmethode zur Positionsbestimmung eines Objekts ist aus US 5,761,155 bekannt. Um die Objektposition relativ zu einem Hintergrund zu ermitteln und insbesondere die gesamte laterale Ausdehnung in einem Schritt zu erfassen, werden drei Ultraschallwandler oberhalb eines Förderbands verwendet, die nebeneinander quer zur Bewegungsrichtung des Förderbands angebracht sind. Es werden die Amplituden und Laufzeiten der am Messobjekt reflektierten Ultraschallpulse gemessen und Referenzmessungen des Hintergrunds durchgeführt.

US 4,875,198 offenbart eine Ultraschall-Einbruchmeldeanlage. Um in einen geschützten Bereich Eindringende zu detektieren, werden Amplitudendifferenzen der Ultraschallechos zwischen zwei aufeinanderfolgenden Ultraschallpulsen ausgewertet, indem mit ständig aktualisierten Referenzwerten verglichen wird.

In US 5,220,536 wird eine Vorrichtung zur räumlichen Vermessung von Objekten beschrieben, wozu sowohl Lichtschranken als auch Ultraschallsensoren eingesetzt werden.

Von Ultraschallverfahren zur Höhenbestimmung eines Objekts auf einer Transporteinrichtung ist bekannt, dass die Laufzeit der an der Oberfläche der Transporteinrichtung reflektierten Ultraschallpulse als Referenzwert gespeichert wird, dass bei einem Absinken der gemessenen Laufzeit von einem höheren auf einen niedrigeren Wert der niedrigere Wert als Laufzeitwert von an einer Objektoberfläche reflektierten Ultraschallpulsen interpretiert wird und dass aus einer Differenz zwischen dem jüngsten gespeicherten Referenzwert und einem zu einer Objektoberfläche gehörenden Laufzeitwert die Höhe der Objektoberfläche relativ zur Oberfläche der Transporteinrichtung bestimmt wird.

Ein gattungsmäßiger Ultraschallsensor kann eine Steuer- und Auswerteeinheit aufweisen, die eingerichtet ist zum Speichern der Laufzeit der an der Oberfläche der Transporteinrichtung reflektierten Ultraschallpulse als Referenzwert und zum Bestimmen der Höhe einer Objektoberfläche relativ zur Oberfläche der Transporteinrichtung aus einer Differenz zwischen dem jüngsten gespeicherten Referenzwert und dem zu der Objektoberfläche gehörenden Laufzeitwert, wobei bei einem Absinken der gemessenen Laufzeit von einem höheren auf einen niedrigeren Wert der niedrigere Wert als Laufzeitwert von an einer Objektoberfläche reflektierten Ultraschallpulsen interpretiert wird.

Als eine **Aufgabe** der Erfindung kann angesehen werden, ein Verfahren und einen Ultraschallsensor zu schaffen, welche den zuverlässigen Nachweis auch von sehr dünnen Objekten ermöglichen.

Diese Aufgabe wird in einem ersten Aspekt der Erfindung durch das Verfahren mit den Merkmalen des Anspruchs 1 gelöst.

In einem weiteren Gesichtspunkt wird die oben genannte Aufgabe durch den Ultraschallsensor mit den Merkmalen des Anspruchs 10 gelöst.

Bevorzugte Ausgestaltungen des erfindungsgemäßen Verfahrens sind Gegenstand der abhängigen Ansprüche und werden außerdem im Zusammenhang mit den Figuren beschrieben.

Das Verfahren der oben genannten Art ist erfindungsgemäß dadurch weitergebildet, dass bei einem Anstieg der gemessenen Laufzeit von einem niedrigeren auf einen höheren Wert der höhere Wert als neuer Referenzwert gespeichert und verwendet wird.

Der Ultraschallsensor der oben genannten Art ist erfindungsgemäß dadurch weitergebildet, dass die Steuer- und Auswerteeinheit darüber hinaus dazu eingerichtet ist, bei einem Anstieg der gemessenen Laufzeit von einem niedrigeren auf einen höheren Wert den höheren Wert als neuen Referenzwert zu verwenden.

Ein grundlegender Kerngedanke der Erfindung kann zunächst darin gesehen werden, dass zuvor bekannte Informationen über voraussichtliche Messergebnisse bei der Auswertung der Ultraschalllaufzeiten berücksichtigt werden.

Genauer gesagt kann als ein wesentlicher Kerngedanke der Erfindung angesehen werden, dass bei einem Anstieg der gemessenen Laufzeit von einem niedrigeren auf einen höheren Wert der neue höhere Wert als neuer Referenzwert gespeichert und verwendet wird. Dies basiert im Grundsatz auf der Annahme, dass die nachzuweisenden Objekte im Wesentlichen eine Quader- oder Plattenform aufweisen. Bei solchen Objektformen kann bei einem Anstieg der Laufzeit zuverlässig davon ausgegangen werden, dass gerade eine Kante des Objekts den Erfassungsbereich des Ultraschallsensors verlassen hat und dass die folgenden Laufzeitwerte wieder auf Reflexionen an der Oberfläche der Transporteinrichtung zurückgehen.

Im Rahmen der vorliegenden Beschreibung soll der Begriff eines Abspeicherns der Laufzeit breit verstanden und ausgelegt werden. Beispielsweise soll dies auch umfassen, wenn statt der Laufzeit selbst eine Größe abgespeichert wird, welche mit der Laufzeit in Zusammenhang steht, wie zum Beispiel der Abstand oder der doppelte Abstand, also die gesamte von den Ultraschallpulsen zurückgelegte Wegstrecke.

Bezüglich der Positionierung des Ultraschallsensors relativ zu der Transporteinrichtung kommt es nur darauf an, dass die Ultraschallpulse in Richtung der Transporteinrichtung und darauf befindlicher Objekte gesendet werden können. Besonders bevorzugt ist der Ultraschallsensor oberhalb eines Förderbands positioniert und strahlt die Ultraschallpulse nach unten ab. Grundsätzlich kann der Ultraschallsensor aber auch zum Beispiel seitlich neben der Transporteinrichtung angeordnet werden. Die Ultraschallpulse müssen dann mit geeigneten Mitteln, beispielsweise Reflektoren, in Richtung der Transporteinrichtung und der nachzuweisenden Objekte umgelenkt werden.

Als erster wesentlicher Vorteil der Erfindung kann erachtet werden, dass die Referenz kontinuierlich nachgeführt wird und deshalb praktisch zu jedem beliebigen Zeitpunkt mit hoher Genauigkeit bekannt ist.

Dementsprechend kann auch die durch Laufzeitbestimmung von Ultraschallpulsen grundsätzlich mögliche Entfernungsauflösung nahezu optimal ausgenutzt werden.

Da bei dem erfindungsgemäßen Verfahren die Referenz praktisch zu jedem Zeitpunkt sehr gut bekannt ist, entspricht die Höhenmessung einer Messung der Dicke der nachzuweisenden Objekte. Dies ermöglicht grundsätzlich auch eine Aussage darüber, ob sich auf der Transporteinrichtung die in der jeweiligen Mess- oder Einsatzsituation erwarteten Objekte befinden.

Die festgestellte Höhe kann, beispielsweise als zur Höhe proportionales Spannungssignal, an einem Ausgang des Ultraschallsensors ausgegeben werden.

Bei der Transporteinrichtung kann es sich grundsätzlich um jede Art von Einrichtung handeln, welche die nachzuweisenden Objekte durch einen Nachweis- oder Erfassungsbereich des hierzu geeignet positionierten Ultraschallsensors hindurchbewegt. Besonders vorteilhaft sind das erfindungsgemäße Verfahren und der erfindungsgemäße Ultraschallsensor bei einem Transportband oder einem Förderband einsetzbar.

Bei der Steuer- und Auswerteeinheit kann es sich um einen Microcontroller oder funktional vergleichbare und äquivalente Komponenten, beispielsweise programmierbare Logikbausteine, handeln. Die entsprechenden Funktionalitäten des erfindungsgemäßen Verfahrens und des erfindungsgemäßen Ultraschallsensors können in wesentlichen Teilen insbesondere in einer Software für die Steuer- und Auswerteeinheit enthalten sein.

Die Software kann beispielsweise so programmiert sein, dass der erste nach einem Einschaltvorgang gewonnene Wert als Referenzwert verwendet wird. Alternativ kann auch ein letzter abgespeicherter Wert unmittelbar nach dem Einschaltvorgang als Referenzwert verwendet werden.

Durch die erfindungsgemäße Idee, den Referenzwert jeweils zeitnah nachzuführen, kann demgemäß auch berücksichtigt werden, wenn sich die Oberfläche des Transportbands um wenige Millimeter von dem Ultraschallsensor entfernt.

Bei einer bevorzugten Variante des erfindungsgemäßen Verfahrens kann indes auch eine Verkürzung des Abstands zwischen der Oberfläche der Transporteinrichtung und dem Ultraschallsensor berücksichtigt werden. Hierbei ist zu beachten, dass erfindungsgemäß bei einem Absinken der gemessenen Laufzeit im Allgemeinen davon ausgegangen wird, dass sich ein Objekt im Überwachungsbereich befindet.

Bei einer vorteilhaften Variante des erfindungsgemäßen Verfahrens, bei dem auch eine Verkürzung des Abstands zwischen Oberfläche der Transporteinrichtung und dem Ultraschallsensor berücksichtigt werden kann, ist demgemäß vorgesehen, dass bei einem Absinken der gemessenen Laufzeit von einem höheren auf einen niedrigeren Wert der niedrigere Wert als neuer Referenzwert gespeichert und verwendet wird, wenn der niedrigere Wert der Laufzeit für eine festzulegende Zahl von aufeinanderfolgenden Messungen gemessen wird.

Die Zahl der aufeinanderfolgenden Messungen, mit anderen Worten, die Zeit, die abgewartet wird, bevor ein niedrigerer Wert der Laufzeit als neuer Referenzwert verwendet wird, wird zweckmäßig so gewählt, dass zuverlässig ausgeschlossen werden kann, dass sich bei normaler Bewegungsgeschwindigkeit noch ein Objekt im Überwachungsbereich befindet.

Wenn eine maximal zu erwartende Änderung des Referenzwerts kleiner ist als eine Dicke oder Höhe der nachzuweisenden Objekte, ist es außerdem von Vorteil, wenn bei einem Absinken der gemessenen Laufzeit von einem höheren auf einen niedrigeren Wert der niedrigere Wert als neuer Referenzwert gespeichert und verwendet wird, wenn der niedrigere Wert in einem festzulegenden Bereich um den jüngsten gespeicherten Referenzwert liegt. Dieser Bereich wird dann zweckmäßig kleiner als die Dicke der nachzuweisenden Objekte gewählt.

Die Funktionalität des erfindungsgemäßen Verfahrens kann weiter gesteigert werden, wenn dem Ultraschallsensor ein Vorschubsignal der Transporteinrichtung zugeführt wird. Beispielsweise kann aus einer Vorschubgeschwindigkeit der Transporteinrichtung und einer Zeitdifferenz zwischen einem Absinken und einem darauf folgenden Anstieg der gemessenen Laufzeit eine Länge des jeweiligen Objekts bestimmt werden.

Um zu vermeiden, dass ein niedrigerer Laufzeitwert unzutreffend als neuer Referenzwert verwendet wird, kann das Vorschubsignal der Transporteinrichtung auch bei der Auswertung berücksichtigt werden. Die Logik der Steuer- und Auswerteeinheit kann beispielsweise so programmiert werden, dass bei Stillstehen der Transporteinrichtung eine auf einen niedrigeren Wert abgesunkene Laufzeit nicht als neuer Referenzwert verwendet wird.

Bei einer besonders bevorzugten Ausgestaltung des erfindungsgemäßen Verfahrens wird die für ein Objekt festgestellte Höhe mit mindestens einem Vergleichswert verglichen und der Ultraschallsensor gibt ein Signal aus, wenn eine bei dem Vergleich festgestellte Abweichung außerhalb eines festzulegenden Intervalls erlaubter Abweichungen vom Vergleichswert liegt.

Prinzipiell kann ein Vergleichswert aus Höhen von Objekten bestimmt werden, die den Erfassungsbereich des Ultraschallsensors bereits durchlaufen haben. Beispielsweise kann hierbei ein Mittelwert der Höhen einer gewissen Anzahl von zuletzt durchgelaufenen Objekten verwendet werden.

Besonders bevorzugt wird dem Ultraschallsensor aber mindestens ein Vergleichswert spezifisch für die nachzuweisenden Objekte eingegeben. Es kann dann sehr empfindlich geprüft werden, ob die jeweils nachgewiesenen Objekte die in der Anwendungssituation richtigen Objekte sind.

Bei einer weiteren besonders bevorzugten Variante des erfindungsgemäßen Verfahrens werden dem Ultraschallsensor mehrere Vergleichswerte eingegeben, die ganzzahligen Vielfachen einer Dicke von blattartigen Objekten entsprechen. Als blattartige Objekte werden in diesem Zusammenhang beispielsweise Bleche oder Papierbögen angesehen. Es kann dann zuverlässig erkannt werden, ob genau ein Stück der fraglichen Objekte oder eventuell mehrere der blattartigen Objekte aufeinander auf der Transporteinrichtung liegen.

Eine falsche Zuführung etwa von zwei aufeinanderliegenden Blechen zu einer Presse, kann demgemäß mit dem erfindungsgemäßen Verfahren und dem erfindungsgemäßen Ultraschallsensor zuverlässig ausgeschlossen werden.

Weitere Vorteile und Merkmale des erfindungsgemäßen Verfahrens und des erfindungsgemäßen Ultraschallsensors werden nachstehend mit Bezug auf die beigefügten Figuren erläutert.

Hierin zeigen:
- Fig. 1 bis Fig. 4:: Schematische Ansichten eines erfindungsgemäßen Ultraschallsensors in verschiedenen Messsituationen bei der Durchführung des erfindungsge- mäßen Verfahrens an einem Transportband;
- Fig. 5:: eine schematische Darstellung eines Ausgangssignals des erfindungsge- mäßen Ultraschallsensors in Abhängigkeit einer festgestellten Objekthö- he; und
- Fig. 6:: ein schematisches Diagramm, in welchem der zeitliche Verlauf des Aus- gangssignals des Ultraschallensors für zwei verschiedene Messsituatio- nen dargestellt ist.

In allen Figuren sind identische und äquivalente Komponenten jeweils mit denselben Bezugszeichen gekennzeichnet.

Dargestellt ist jeweils ein Ultraschallsensor 100, der über einer Transporteinrichtung 200 positioniert ist.

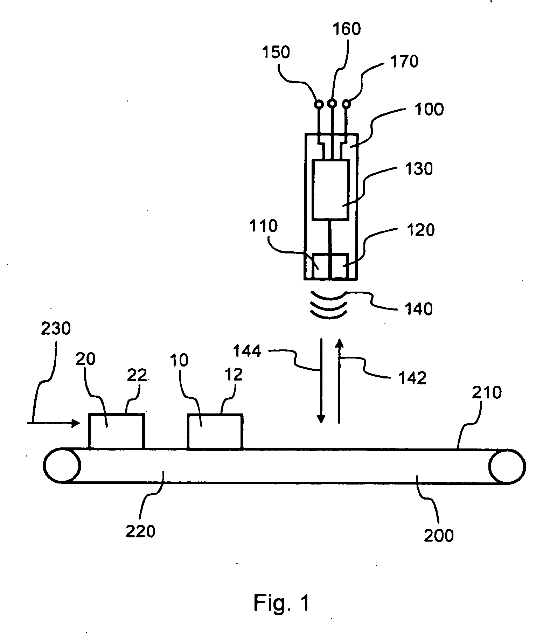

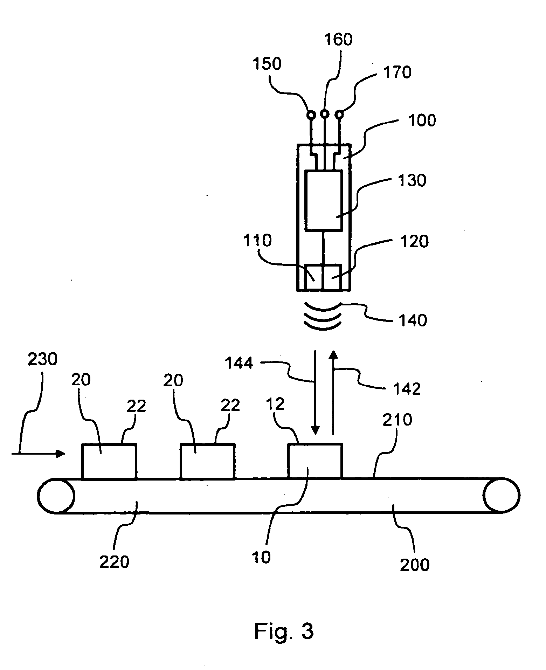

Die Transporteinrichtung 200, wobei es sich im gezeigten Ausführungsbeispiel um ein Transportband 220 handelt, dient in den in Figuren 1 bis 3 dargestellten Situationen zum Transport von quaderförmigen Objekten 10, 20 in einer durch den Pfeil 230 angedeuteten Richtung, in den Figuren 1 bis 3 also von links nach rechts. Bei den Objekten 10, 20 kann es sich um Kartons, in denen eine Ware verpackt ist, handeln.

Der erfindungsgemäße Ultraschallsensor 100 weist als wesentliche Bestandteile einen Sender 110 und einen Empfänger 120 sowie eine Steuer- und Auswerteeinheit 130 auf. Der Sender 110 und der Empfänger 120 können durch ein und dasselbe Piezo-Element gebildet sein. Die Steuer- und Auswerteeinheit 130 ist mit dem Sender 110 und dem Empfänger 120 verbunden und weist schematisch dargestellte Anschlüsse 150, 160, 170 auf. An den Anschlüssen 150, 160 werden Messsignale und Schaltsignale des UItraschallsensors 100 bereitgestellt. Ein Vorschubsignal der Transporteinrichtung 200 und/oder weitere Daten können dem Ultraschallsensor 100 über den Anschluss 170, wobei es sich auch um eine Datenschnittstelle handeln kann, zugeführt werden. Der Sender 110 sendet entsprechend einer Ansteuerung durch die Steuer- und Auswerteeinheit 130 wiederholend Ultraschallpulse 140 in Richtung 144 des Transportbands 220 und eventuell darauf befindliche Objekte 10, 20 aus.

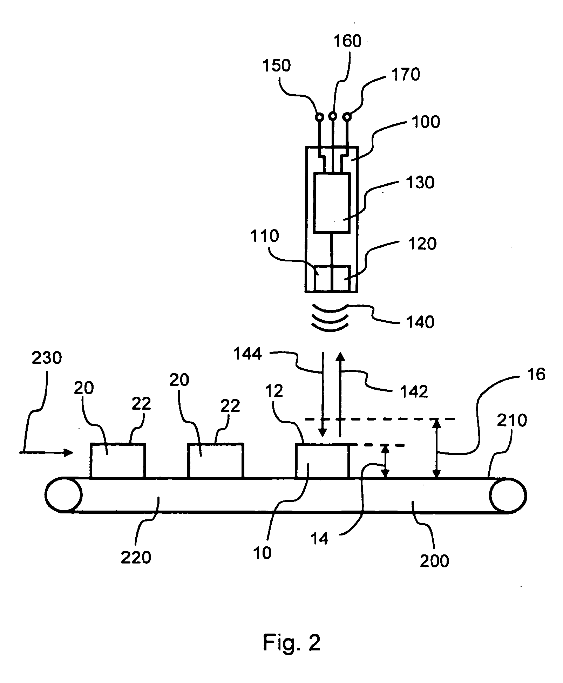

Von einer Oberfläche 210 des Transportbands 220 oder von Objektoberflächen 12, 22 der mit dem Transportband beförderten Objekte 10, 20 werden die Ultraschallpulse zurück in Richtung 142 des Empfängers 120 reflektiert und dort nachgewiesen. Während in der in Fig. 1 gezeigten Situation die Ultraschallpulse 140 von der Oberfläche 210 des Transportbands 220 reflektiert werden, erfolgt bei den in den Figuren 2, 3 und 4 dargestellten Messsituationen die Reflexion an der Oberfläche 12 eines Objekts 10, 33.

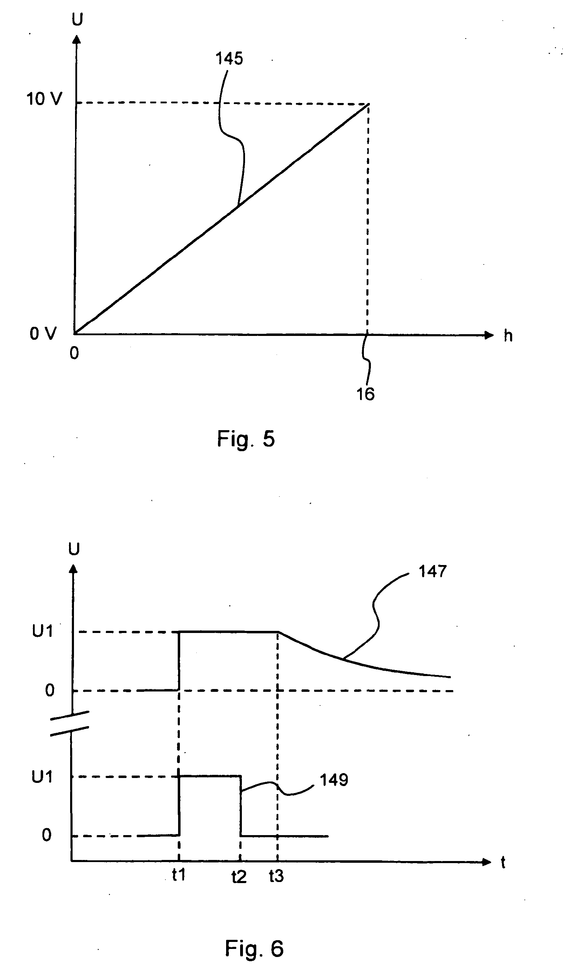

Die Zeitpunkte, in denen die Ultraschallpulse 140 von dem Sender 110 ausgesandt werden und die Zeitpunkte, in denen die zurückreflektierten Ultraschallpulse 140 vom Empfänger 120 nachgewiesen werden, werden in der Steuer- und Auswerteeinheit 130 verarbeitet. Aus Sende- und Empfangszeitpunkten, die zu denselben Ultraschallpulsen gehören, werden durch Bilden der Differenz die Laufzeiten ermittelt. Mit Hilfe der Schallgeschwindigkeit des Ultraschalls kann sodann die absolute Laufstrecke des Ultraschalls, die dem doppelten Abstand der jeweiligen reflektierenden Oberfläche vom Ultraschallsensor 100 entspricht, bestimmt werden. Durch Bestimmen des Abstands des Ultraschallsensors 100 von der Objektoberfläche 12 und der Oberfläche 210 des Transportbands 220 und durch Bilden der Differenz dieser Werte erhält man als Ergebnis schließlich eine Höhe 14 des Objekts 10 über der Oberfläche 210 des Transportbands 220. Die Höhe 14 des Objekts 10 entspricht der Dicke des Objekts 10 relativ zur Oberfläche 210 des Transportbands 220. In dem in den Figuren gezeigten Beispiel wird eine zu dieser Höhe 14 proportionale Spannung an dem Ausgang 160 ausgegeben. Eine Spannungsrampe 145, welche die proportionale Zuordnung eines Höhenintervalls von 0 bis zur Höhe 16, die beispielsweise 30 mm betragen kann, auf ein Spannungsintervall von 0 bis 10 Volt veranschaulicht, ist in Figur 5 schematisch dargestellt.

Diese Skalierung der Ausgangsspannung kann jeweils bedarfsgerecht an die gewünschte Anwendung und apparative Umgebung angepasst werden.

Ein wesentlicher Kerngedanke der vorliegenden Erfindung kann darin gesehen werden, dass sich der Ultraschallsensor 100 durch die anspruchsgemäßen Maßnahmen automatisch auf die Oberfläche 210 des Transportbands 220 referenziert und abgleicht. Die Laufzeit zwischen dem Ultraschallsensor 100 und der Oberfläche 210 des Transportbands 220 wird kontinuierlich gemessen und im gezeigten Beispiel wird, wenn sich kein Objekt 10 zwischen Ultraschallsensor 100 und dem Transportband 220 befindet, am Ausgang 160 Null Volt ausgegeben. Temperaturdriften und mechanische Driften können auf diese Weise kompensiert werden. Wenn sich das Objekt 10, ausgehend von der Situation in Fig. 1, von links kommend in den Erfassungsbereich des Ultraschallsensors 100 bewegt, sinkt die von dem Ultraschallsensor 100 nachgewiesene Laufzeit von einem höheren, nämlich dem zur Oberfläche 210 des Transportbands 220 gehörenden Wert ab auf einen niedrigeren, zur Oberfläche 12 des Objekts 10 gehörenden Wert. Erfindungsgemäß wird dies von der Steuer- und Auswerteeinheit 130 als eine von einem Objekt generierte Änderung interpretiert und entsprechend wird, wie zuvor beschrieben, die Höhe 14 des Objekts 10 über der Oberfläche 210 des Transportbands 220 am Ausgang 160 des Ultraschallsensors 100 als proportionales Spannungssignal ausgegeben.

Eine weitere wesentliche Funktionalität des erfindungsgemäßen Ultraschallsensors 100 und des erfindungsgemäßen Verfahrens besteht darin, dass bei Anstieg der gemessenen Laufzeit von einem niedrigeren auf einen höheren Wert dieser höhere Wert als neue Referenz gespeichert und für die folgenden Höhenbestimmungen verwendet wird.

Dies ist beispielsweise der Fall, wenn sich ausgehend von der Situation in Fig. 2 das Objekt 10 weiter nach rechts und schließlich aus dem Erfassungsbereich des Ultraschallsensors 100 herausbewegt. Der erfindungsgemäße Ultraschallsensor 100 stellt sich sodann rasch auf den Abstand zur Oberfläche 210 des Transportbands 220 als neue Referenz ein. Die Höhe oder Dicke der Objekte 10 und 20 wird aus diesem Grund bei dem erfindungsgemäßen Verfahren mit unterschiedlichen Referenzen bestimmt. Eventuelle Schwankungen oder Driften, die in der kurzen Zeit, in der sich das Objekt 10 aus dem Erfassungsbereich herausbewegt und das folgende Objekt 20 in den Erfassungsbereich des Ultraschallsensors 100 hineinbewegt, auftreten sollten, werden auf diese Weise kompensiert oder eliminiert.

Grundsätzlich kann durch thermische oder mechanische Driften der Abstand zwischen dem Ultraschallsensor 100 und der Oberfläche 210 des Transportbands 220 auch kleiner werden, was eine kürzere Laufzeit der Ultraschallpulse zur Folge hat. Erfindungsgemäß wird solch ein niedrigerer Wert der Laufzeit zunächst einem Objekt zugeordnet. Es bestehen verschiedene Möglichkeiten, auch aus einem niedrigeren Laufzeitwert eine neue Referenz abzuleiten.

Zum einen kann eine Information über die Bewegungsgeschwindigkeit der nachzuweisenden Objekte relativ zum Ultraschallsensor 100 verwendet werden, um eine Zeitkonstante festzulegen. Nach Ablauf dieser festgelegten Zeit oder, äquivalent hierzu, einer gewissen Zahl von aufeinanderfolgenden Messungen, wird der kürzere Laufzeitwert als neue Referenz gespeichert und verwendet. Am Ausgang 160 sinkt dann die Spannung wieder auf Null ab.

Die entsprechenden zeitlichen Verläufe der Spannung am Ausgang 160 des Ultraschallsensors 100 sind schematisch in Fig. 6 gezeigt. Die Kurve 147 stellt den zeitlichen Verlauf dar, der sich ergibt, wenn das Transportband 220 angehalten wird und das Objekt 10 demgemäß unter dem Ultraschallsensor 100 stehen bleibt. Bei normalem Vorschub des Transportbands 200 wird am Ausgang 160 ein Spannungsverlauf entsprechend der Kurve 149 ausgegeben.

Alternativ oder ergänzend hierzu kann ein auf einen niedrigeren Wert abgesunkener Abstand auch mit einem Vergleichswert verglichen werden und es können beispielsweise als neue Referenzwerte nur solche Werte zugelassen werden, die sich von der bisherigen Referenz um weniger als eine festzulegende Maximalabweichung unterscheiden.

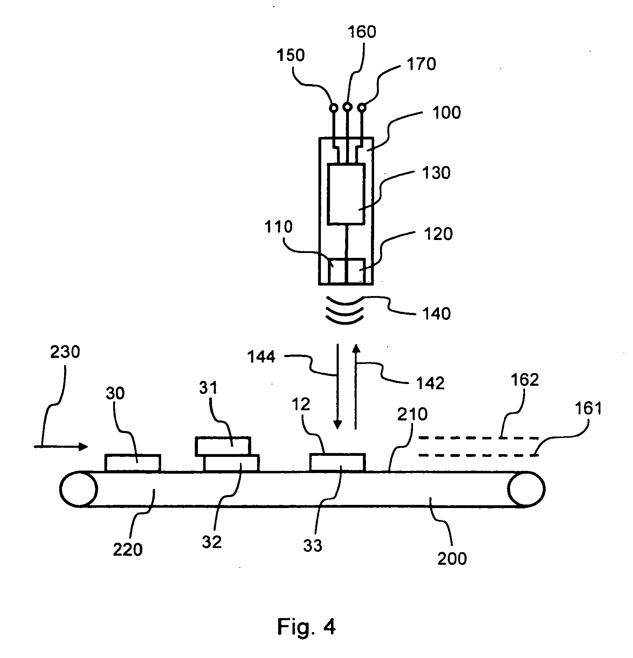

Mit Hilfe des erfindungsgemäßen Verfahrens und des erfindungsgemäßen Ultraschallsensors 100 ist insbesondere in vorteilhafter Weise auch der Nachweis von sehr dünnen Materialien, beispielsweise sehr dünnen Blechen oder Papierbögen, möglich. Dies wird mit Bezug auf Fig. 4 näher erläutert. Dort handelt es sich bei den nachzuweisenden Objekten 30, 31, 32, 33 beispielsweise um dünne Bleche. Dabei liegen zwei Bleche 31, 32 übereinander, was unerwünscht ist und mit dem erfindungsgemäßen Ultraschallsensor 100 festgestellt werden kann. Durch die kontinuierliche Nachführung der Referenz ist die Bestimmung der Dicke oder, gleichbedeutend hiermit der Höhe der Objekte über der Oberfläche 210 des Transportbands 220, äußerst genau mit einer Auflösung von bis zu 0,17 mm möglich. Durch gezieltes Einstellen der oben beschriebenen Skalierung und durch Setzen geeigneter Vergleichsschwellen 161, 162 können die Messsituationen "kein Material", "Einzelmaterial" und "Doppelmaterial" durch Vergleich der ermittelten Dicken mit den Werten 161 und 162 zuverlässig getrennt werden. Beispielsweise kann, wenn ein Doppelmaterial, wie im Fall der Bleche 31, 32, nachgewiesen wird, am Schaltausgang 150 ein entsprechendes Fehlersignal ausgegeben werden.

Mit der vorliegenden Erfindung wird ein neuartiges Verfahren zur Dickenbestimmung von Objekten auf einer Transporteinrichtung sowie ein neuartiger Ultraschallsensor bereitgestellt, bei welchen im laufenden Messbetrieb kontinuierlich eine Kalibrierung der Referenz durchgeführt wird und auch sehr dünne Objekte zuverlässig nachgewiesen werden können und welche insbesondere auch eine Doppelmaterialerkennung gestatten.

## Patentansprüche

1. Verfahren zur Höhenbestimmung von Objekten auf einer Transporteinrichtung,
bei dem ein relativ zu der Transporteinrichtung (200) positionierter Ultraschallsensor (100) wiederholend Ultraschallpulse (140) in Richtung der Transporteinrichtung (200) und gegebenenfalls darauf befindlicher nachzuweisender Objekte (10, 20) sendet,
bei dem die Ultraschallpulse von einer Oberfläche (210) der Transporteinrichtung (200) oder Objektoberflächen (12, 22) der nachzuweisenden Objekte (10, 20) reflektiert und von dem Ultraschallsensor (100) nachgewiesen werden,
bei dem aus Sendezeitpunkten und Nachweiszeitpunkten der Ultraschallpulse (140) Laufzeiten der Ultraschallpulse (140) bestimmt werden,
bei dem aus Laufzeiten der an einer Objektoberfläche (12) reflektierten Ultraschallpulse eine Höhe (14) der Objektoberfläche (12) relativ zur Oberfläche (210) der Transporteinrichtung (200) bestimmt wird,
bei dem die Laufzeit der an der Oberfläche (210) der Transporteinrichtung (200) reflektierten Ultraschallpulse als Referenzwert gespeichert wird,
bei dem bei einem Absinken der gemessenen Laufzeit von einem höheren auf einen niedrigeren Wert der niedrigere Wert als Laufzeitwert von an einer Objektoberfläche (12) reflektierten Ultraschallpulsen interpretiert wird und
bei dem aus einer Differenz zwischen dem jüngsten gespeicherten Referenzwert und einem zu einer Objektoberfläche (12) gehörenden Laufzeitwert die Höhe der Objektoberfläche (12) relativ zur Oberfläche (210) der Transporteinrichtung (200) bestimmt wird,
**dadurch gekennzeichnet,**
**dass** bei einem Anstieg der gemessenen Laufzeit von einem niedrigeren auf einen höheren Wert der höhere Wert als neuer Referenzwert gespeichert und verwendet wird.

2. Verfahren nach Anspruch 1,
**dadurch gekennzeichnet,**
**dass** bei einem Absinken der gemessenen Laufzeit von einem höheren auf einen niedrigeren Wert der niedrigere Wert als neuer Referenzwert gespeichert und verwendet wird, wenn der niedrigere Wert der Laufzeit für eine festzulegende Zahl von aufeinanderfolgenden Messungen gemessen wird.

3. Verfahren nach Anspruch 1 oder 2,
**dadurch gekennzeichnet,**
**dass** bei einem Absinken der gemessenen Laufzeit von einem höheren auf einen niedrigeren Wert der niedrigere Wert als neuer Referenzwert gespeichert und verwendet wird, wenn der niedrigere Wert in einem festzulegenden Bereich um den jüngsten gespeicherten Referenzwert liegt.

4. Verfahren nach einem der Ansprüche 1 bis 3,
**dadurch gekennzeichnet,**
**dass** die Transporteinrichtung (200) ein Transportband (220) ist.

5. Verfahren nach einem der Ansprüche 1 bis 4,
**dadurch gekennzeichnet,**
**dass** dem Ultraschallsensor (100) ein Vorschubsignal der Transporteinrichtung (200) zugeführt wird und
**dass** aus einer Vorschubgeschwindigkeit der Transporteinrichtung (200) und einer Zeitdifferenz zwischen einem Absinken und einem darauffolgenden Anstieg der gemessenen Laufzeit eine Länge des Objekts (10, 20) bestimmt wird.

6. Verfahren nach einem der Ansprüche 1 bis 5,
**dadurch gekennzeichnet,**
**dass** die für ein Objekt (10) festgestellte Höhe (14) mit mindestens einem Vergleichswert verglichen wird und
**dass** der Ultraschallsensor (100) ein Signal ausgibt, wenn eine bei dem Vergleich festgestellte Abweichung außerhalb eines festzulegenden Intervalls erlaubter Abweichungen vom Vergleichswert liegt.

7. Verfahren nach Anspruch 6,
**dadurch gekennzeichnet,**
**dass** der Vergleichswert aus Höhen von Objekten bestimmt wird, die einen Erfassungsbereich des Ultraschallsensors (100) bereits durchlaufen haben.

8. Verfahren nach einem der Ansprüche 6 oder 7,
**dadurch gekennzeichnet,**
**dass** dem Ultraschallsensor (100) mindestens ein Vergleichswert spezifisch für die nachzuweisenden Objekte (10, 20) eingegeben wird.

9. Verfahren nach einem der Ansprüche 6 bis 8
**dadurch gekennzeichnet,**
**dass** dem Ultraschallsensor (100) mehrere Vergleichswerte eingegeben werden, die ganzzahligen Vielfachen einer Dicke von blattartigen Objekten entsprechen.

10. Ultraschallsensor zur Höhenbestimmung von Objekten auf einer Transporteinrichtung,
mit einem Sender (110) zum wiederholenden Aussenden von Ultraschallpulsen (140),
mit einem Empfänger (120) zum Empfangen von Ultraschallpulsen, die von einer Oberfläche (210) der Transporteinrichtung (200) oder Objektoberflächen (12, 22) der nachzuweisenden Objekte (10, 20) reflektiert werden,
mit einer Steuer- und Auswerteeinheit (130), welche eingerichtet ist zum Ansteuern des Senders (110), zum Bestimmen von Laufzeiten der Ultraschallpulse aus Sendezeitpunkten und Nachweiszeitpunkten der Ultraschallpulse, zum Bestimmen einer Höhe (14) einer Objektoberfläche (12) relativ zur Oberfläche (210) der Transporteinrichtung (200) aus Laufzeiten der an der Objektoberfläche (12) reflektierten Ultraschallpulse, zum Speichern der Laufzeit der an der Oberfläche (210) der Transporteinrichtung (200) reflektierten Ultraschallpulse als Referenzwert und zum Bestimmen der Höhe (14) einer Objektoberfläche (12) relativ zur Oberfläche (210) der Transporteinrichtung (200) aus einer Differenz zwischen dem jüngsten gespeicherten Referenzwert und dem zu der Objektoberfläche (12) gehörenden Laufzeitwert, wobei bei einem Absinken der gemessenen Laufzeit von einem höheren auf einen niedrigeren Wert der niedrigere Wert als Laufzeitwert von an einer Objektoberfläche (12) reflektierten Ultraschallpulsen interpretiert wird,
**dadurch gekennzeichnet,**
**dass** die Steuer- und Auswerteeinheit (130) darüber hinaus bei einem Anstieg der gemessenen Laufzeit von einem niedrigeren auf einen höheren Wert den höheren Wert als neuen Referenzwert verwendet.

## Claims

1. A method for determining the height of objects disposed on a conveying device, wherein an ultrasonic sensor (100) positioned in relation to said conveying device (200) transmits repetitively ultrasonic pulses (140) directed toward said conveying device (200) and any detectable objects (10, 20) disposed thereon,
wherein said ultrasonic pulses are reflected from a surface (210) of said conveying device (200) or surfaces (12, 22) of said detectable objects (10, 20) and are detected by the ultrasonic sensor (100),
wherein delay times of the ultrasonic pulses (140) are determined from the moments of transmission and the moments of detection of said ultrasonic pulses (140),
wherein a height (14) of an object surface (12) relative to the surface (210) of said conveying device (200) is determined from the delay times of said ultrasonic pulses reflected from an object surface (12),
wherein the delay time of the ultrasonic pulses reflected from the surface (210) of said conveying device (200) is stored as a reference value,
wherein when there is a decrease in the measured delay time from a higher to a lower value, said lower value is interpreted as the delay time value of ultrasonic pulses reflected from an object surface (12), and
wherein the height of said object surface (12) relative to the surface (210) of said conveying device (200) is determined from a difference between the most recently stored reference value and a delay time value relevant to an object surface (12),
**characterized in that**
when there is an increase in the measured delay time from a lower to a higher value, said higher value is stored and used as a new reference value.

2. The method as defined in claim 1,
**characterized in that**
when there is a decrease in said measured delay time from a higher to a lower value, said lower value is stored and used as a new reference value when said lower value of said delay time is measured for a given number of consecutive measurements.

3. The method as defined in claim 1 or claim 2,
**characterized in that**
when there is a decrease in said measured delay time from a higher to a lower value, said lower value is stored and used as a new reference value when said lower value lies within a given range encompassing the most recently stored reference value.

4. The method as defined in any one of claims 1 to 3,
**characterized in that**
said conveying device (200) is a conveyor belt (220).

5. The method as defined in any one of claims 1 to 4,
**characterized in that**
a forward advance signal of said conveying device (200) is fed to said ultrasonic sensor (100) and
that a length of said object (10, 20) is determined from a forward advance speed of said conveying device (200) and a time difference between a decrease and subsequent increase in the measured delay time.

6. The method as defined in any one of claims 1 to 5,
**characterized in that**
the height (14) determined for an object (10) is compared with at least one comparative value and
that said ultrasonic sensor (100) generates a signal if said comparison yields a deviation beyond a given range of permitted deviations from said comparative value.

7. The method as defined in claim 6,
**characterized in that**
said comparative value is determined from heights of objects that have already been detected within the detection field of said ultrasonic sensor (100).

8. The method as defined in any one of claims 6 or 7,
**characterized in that**
at least one comparative value specific to the objects (10, 20) to be detected is fed to said ultrasonic sensor (100).

9. The method as defined in any one of claims 6 to 8,
**characterized in that**
a plurality of comparative values are fed to said ultrasonic sensor (100), these being whole number multiples of a thickness of sheet-like objects.

10. An ultrasonic sensor for determining the height of objects disposed on a conveying device, comprising
a transmitter (110) for repetitive emission of ultrasonic pulses (140),
a receiver (120) for the reception of ultrasonic pulses which have been reflected from a surface (210) of said conveying device (200) or from surfaces (12, 22) of said objects to be detected (10, 20), and
a controlling and evaluating unit (130) adapted to control said transmitter (110), to compute delay times of said ultrasonic pulses from moments of transmission to moments of detection of said ultrasonic pulses, for determining a height (14) of an object surface (12) relative to the surface (210) of said conveying device (200) from delay times of the ultrasonic pulses reflected from said object surface (12), to store the delay time of the ultrasonic pulses reflected from the surface (210) of said conveying device (200) as a reference value in order to determine the height (14) of an object surface (12) relative to said surface (210) of said conveying device (200) from a difference between the most recently stored reference value and the delay time value relevant to said object surface (12), and when there is a decrease in the measured delay time from a higher to a lower value, the lower value is taken to be the delay time value of ultrasonic pulses reflected from an object surface (12),
**characterized in that**
when there is an increase in the measured delay time from a lower to a higher value, said controlling and evaluating unit (130) further uses the higher value as a new reference value.

## Revendications

1. Procédé de détermination de la hauteur d'objets sur un dispositif de transport, dans lequel un capteur (100) à ultrasons positionné par rapport au dispositif de transport (200) émet de manière répétée des impulsions (140) d'ultrasons en direction du dispositif de transport (200) et d'objets (10, 20) à détecter se trouvant éventuellement sur celui-ci,
dans lequel les impulsions d'ultrasons sont réfléchies par une surface (210) du dispositif de transport (200) ou par des surfaces (12, 22) des objets (10, 20) à détecter et sont détectées par le capteur (100) à ultrasons,
dans lequel, à partir des instants d'émission et des instants de détection des impulsions (140) d'ultrasons, des temps de parcours des impulsions (140) d'ultrasons sont déterminés,
dans lequel, à partir des temps de parcours des impulsions d'ultrasons réfléchies sur une surface (12) d'objet, une hauteur (14) de la surface (12) d'objet par rapport à la surface (210) du dispositif de transport (200) est déterminée,
dans lequel le temps de parcours des impulsions d'ultrasons réfléchies sur la surface (210) du dispositif de transport (200) est enregistré comme valeur de référence,
dans lequel, en cas de baisse du temps de parcours mesuré d'une valeur supérieure à une valeur inférieure, la valeur inférieure est interprétée comme valeur du temps de parcours des impulsions d'ultrasons réfléchies sur une surface (12) d'objet, et
dans lequel à partir d'une différence entre la plus récente valeur de référence enregistrée et une valeur de temps de parcours associée à une surface (12) d'objet, la hauteur de la surface (12) d'objet par rapport à la surface (210) du dispositif de transport (200) est déterminée,
***caractérisé en ce qu'***
en cas de hausse du temps de parcours mesuré d'une valeur inférieure à une valeur supérieure, la valeur supérieure est enregistrée et utilisée comme nouvelle valeur de référence.

2. Dispositif selon la revendication 1,
***caractérisé en ce qu'***
en cas de baisse du temps de parcours mesuré d'une valeur supérieure à une valeur inférieure, la valeur inférieure est enregistrée et utilisée comme nouvelle valeur de référence quand la valeur inférieure du temps de parcours est mesurée pour un nombre à déterminer de mesures successives.

3. Procédé selon la revendication 1 ou 2,
***caractérisé en ce qu'***
en cas de baisse du temps de parcours mesuré d'une valeur supérieure à une valeur inférieure, la valeur inférieure est enregistrée et utilisée comme nouvelle valeur de référence quand la valeur inférieure est située dans une plage à déterminer autour de la plus récente valeur de référence enregistrée.

4. Procédé selon l'une quelconque des revendications 1 à 3,
***caractérisé en ce que***
le dispositif de transport (200) est un tapis de transport (220).

5. Procédé selon l'une quelconque des revendications 1 à 4,
***caractérisé***
**en *ce qu'***au capteur (100) à ultrasons est délivré un signal d'avance du dispositif de transport (200), et
***en ce qu'***à partir de la vitesse d'avance du dispositif de transport (200) et d'une différence de temps entre une baisse et une hausse ultérieure du temps de parcours mesuré, une longueur de l'objet (10, 20) est déterminée.

6. Procédé selon l'une quelconque des revendications 1 à 5,
***caractérisé***
***en ce que*** la hauteur (14) constatée pour un objet (10) est comparée avec au moins une valeur comparative, et
**en *ce que*** le capteur (100) à ultrasons délivre un signal quand un écart constaté lors de la comparaison se trouve en dehors d'un intervalle à déterminer d'écarts autorisés par rapport à la valeur comparative.

7. Procédé selon la revendication 6,
***caractérisé en ce que***
la valeur comparative est déterminée à partir des hauteurs d'objets qui ont déjà traversé une zone de détection du capteur (100) à ultrasons.

8. Procédé selon l'une quelconque des revendications 6 ou 7,
***caractérisé en ce qu'***
au capteur (100) à ultrasons est délivrée au moins une valeur comparative spécifique pour les objets (10, 20) à détecter.

9. Procédé selon l'une quelconque des revendications 6 à 8,
***caractérisé en ce qu'***
au capteur (100) à ultrasons sont envoyées plusieurs valeurs comparatives qui correspondent à des multiples entiers d'une épaisseur d'objets en forme de feuilles.

10. Capteur à ultrasons destiné à déterminer la hauteur d'objets sur un dispositif de transport,
avec un émetteur (110) pour émettre de manière répétée des impulsions (140) d'ultrasons,
avec un récepteur (120) pour recevoir des impulsions d'ultrasons qui sont réfléchies par une surface (210) du dispositif de transport (200) ou des surfaces (12, 22) d'objet des objets (10, 20) à détecter,
avec une unité (130) de commande et d'analyse qui est conçue pour commander l'émetteur (110), pour déterminer des temps de parcours d'impulsions d'ultrasons à partir des instants d'émission et des instants de réception des impulsions d'ultrasons, afin de déterminer une hauteur (14) d'une surface (12) d'objet par
rapport à la surface (210) du dispositif de transport (200) à partir de temps de parcours des impulsions d'ultrasons réfléchies sur la surface (12) d'objet, pour enregistrer comme valeur de référence le temps de parcours des impulsions d'ultrasons réfléchies sur la surface (210) du dispositif de transport (200) et pour déterminer la hauteur (14) d'une surface (12) d'objet par rapport à la surface (210) du dispositif de transport (200) à partir d'une différence entre la plus récente valeur de référence enregistrée et la valeur de temps de parcours associée à la surface (12) d'objet, dans lequel en cas de baisse du temps de parcours mesuré d'une valeur supérieure à une valeur inférieure, la valeur inférieure est interprétée comme valeur du temps de parcours d'impulsions d'ultrasons réfléchies sur une surface (12) d'objet,
***caractérisé en ce qu'***
en cas de hausse du temps de parcours mesuré d'une valeur inférieure à une valeur supérieure, l'unité (130) de commande et d'analyse utilise de plus la valeur supérieure comme nouvelle valeur de référence.
